(19) Europäisches Patentamt / European Patent Office / Office européen des brevets

(11) **EP 4 480 298 A1**

(12) **EUROPÄISCHE PATENTANMELDUNG**

(43) Veröffentlichungstag:
**25.12.2024  Patentblatt 2024/52**

(51) Internationale Patentklassifikation (IPC):
**A01D 41/127** (2006.01)   **A01D 43/08** (2006.01)
**G06T 7/00** (2017.01)   **G06V 10/82** (2022.01)
**A01D 43/10** (2006.01)

(21) Anmeldenummer: **24168672.4**

(22) Anmeldetag: **05.04.2024**

(52) Gemeinsame Patentklassifikation (CPC):
**G06V 10/82; A01D 41/1277; A01D 43/085;
G06T 7/0004;** A01D 43/102; G06T 2207/30128

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **22.06.2023  DE 102023116409**

(71) Anmelder: **CLAAS Selbstfahrende
Erntemaschinen GmbH
33428 Harsewinkel (DE)**

(72) Erfinder:
- **Neitemeier, Dennis
  59510 Lippetal (DE)**
- **Belau, Sven Carsten
  33332 Gütersloh (DE)**
- **Bönig, Ingo
  33330 Gütersloh (DE)**
- **Brune, Markus
  33428 Harsewinkel (DE)**
- **Klein-Helmkamp, Marwin
  49565 Bramsche (DE)**

(74) Vertreter: **CLAAS Gruppe
Mühlenwinkel 1
33428 Harsewinkel (DE)**

(54) **BILDANALYSEVERFAHREN ZUR COMPUTERIMPLEMENTIERTEN BESTIMMUNG DES KORNAUFSCHLUSSGRADES VON KÖRNERN**

(57)     Die vorliegende Erfindung betrifft ein Bildanalyseverfahren zur computerimplementierten Bestimmung des Kornaufschlussgrades ($CSPS_{opt}$) von Körnern (23) innerhalb eines von Arbeitsaggregaten (20) eines Feldhäckslers (1) bearbeiteten Erntegutstroms (21), der ganze Körner (23) und zerkleinerte Körner (24) als Kornbestandteile (25) sowie Nicht-Kornbestandteile (26) umfasst, wobei zumindest ein Arbeitsaggregat (20) in Abhängigkeit vom bestimmten Kornaufschlussgrad ($CSPS_{opt}$) angesteuert wird, wobei mittels einer optischen Erfassungseinrichtung (16) zyklisch Bilder (28) des Erntegutstroms (21) aufgenommen und an eine Bildanalyseeinrichtung (27) zur Auswertung übertragen werden, wobei
- in einer ersten Stufe des Bildanalyseverfahrens in den Bildern (28) enthaltene Bildpixel in Kornbestandteile (25) und Nicht-Kornbestandteile (26) klassifiziert werden,
- in einer zweiten Stufe des Bildanalyseverfahrens eine Längenbestimmung einer langen Hauptachse (30) und einer kurzen Hauptachse (31) jedes klassifizierten Kornbestandteils (25) mittels eines Längen-Breiten-Vergleichs durchgeführt wird,
wobei die Durchführung der ersten Stufe und der zweiten Stufe des Bildanalyseverfahrens durch zumindest ein neuronales Netzwerk durchgeführt wird.

Fig. 1

EP 4 480 298 A1

**Beschreibung**

Die vorliegende Erfindung betrifft ein Bildanalyseverfahren zur computerimplementierten Bestimmung des Kornaufschlussgrades von Körnern gemäß dem Oberbegriff des Anspruches 1. Weiterhin sind eine Bildanalyseeinrichtung sowie ein Feldhäcksler Gegenstand der Erfindung.

Aus der DE 10 2020 122 202 A1 ist ein Feldhäcksler bekannt, welcher zum Abernten eines Feldbestandes und zur Verarbeitung von Erntegut des Feldbestandes Arbeitsaggregate aufweist. Das Kornbestandteile und Nicht-Kornbestandteile umfassende Erntegut wird im Betrieb des Feldhäckslers in einem Erntegutstrom entlang eines Ernteguttransportweges durch den Feldhäcksler transportiert. Mittels einer als Kamera ausgeführten optischen Erfassungseinrichtung werden Bilddaten des Ernteguts des Erntegutstroms aufgenommen. Anhand dieser Bilddaten wird in einer Bilderkennungsroutine mittels eines Bilderkennungsalgorithmus die Zusammensetzung des Erntegutstroms in Kornbestandteile und Nicht-Kornbestandteile unterteilt, um aus den geometrischen Eigenschaften der Nicht-Kornbestandteile nach einer vorbestimmten Berechnungsvorschrift einen Indikator für einen Strukturanteil des Ernteguts zu ermitteln.

Die DE 10 2014 011 308 A1 beschreibt ein Bildanalyseverfahren zur Bestimmung eines Kornaufschlussgrades von Körnern gemäß dem Oberbegriff des Anspruches 1. Durch ein optisches Messsystem werden Bilddaten des Ernteguts des Erntegutstroms aufgenommen und analysiert. Dazu werden kornartige Partikel, d.h. im Gutstrom enthaltene ganze Körner und Kornbestandteile, identifiziert. Anhand dieser Bilddaten werden die Kornbestandteile in zerkleinerte und nicht-zerkleinerte Kornbestandteile unterteilt, und in mengenmäßige Größenfraktionen aufgeteilt. Aus dem Verhältnis der Mächtigkeit der Größenfraktionen wird auf den Kornaufschlussgrad, um so den Betrieb des Feldhäckslers zu optimieren. Das Messsystem arbeitet dabei als optisches Sieb. Die Unterscheidung zwischen zerkleinerten und nicht-zerkleinerten Kornbestandteilen erfolgt anhand eines definierten Grenzwertes für die Größe von Kornbestandteilen, welcher sich, bei Verwendung als Tierfutter, an der Verdaubarkeit der Kornbestandteile orientiert. Die physikalischen Eigenschaften von Maissilage tragen wesentlich zum Wert der Ernte bei, wenn sie verfüttert wird. Richtig verarbeitete Körner, d.h. aufgeschlossene Körner, werden gut verdaut und tragen zur Milchproduktion bei, während schlecht verarbeitete Körner die Kuh unverdaut passieren können. Als Grenzwert für den Größenvergleich wird ein standardmäßig in Labormessungen bei Siebverfahren verwendeter, empirisch ermittelter Durchmesser für Sieböffnungen zugrunde gelegt, auf dessen Grundlage ein statischer Qualitätswert für die Kornaufbereitung, der sogenannte Corn-Silage-Processing-Score (CSPS), bestimmt wird. Nachteilig an dem aus der DE 10 2014 011 308 A1 bekannten Bildanalyseverfahren ist die Aufwendigkeit und Ungenauigkeit.

Ausgehend vom vorstehend genannten Stand der Technik liegt der Erfindung die Aufgabe zugrunde, ein Verfahren der eingangs genannten Art weiterzubilden, welches die Genauigkeit der Bestimmung des Kornaufschlussgrades von Körnern verbessert.

Diese Aufgabe wird erfindungsgemäß durch ein Verfahren mit den Merkmalen des Anspruches 1 gelöst. Vorteilhafte Weiterbildungen sind Gegenstand der hiervon abhängigen Ansprüche.

Gemäß dem Anspruch 1 wird ein Bildanalyseverfahren zur computerimplementierten Bestimmung des Kornaufschlussgrades von Körnern innerhalb eines von Arbeitsaggregaten eines Feldhäckslers bearbeiteten Erntegutstroms vorgeschlagen, der ganze Körner und zerkleinerte Körner als Kornbestandteile sowie Nicht-Kornbestandteile umfasst, wobei zumindest ein Arbeitsaggregat in Abhängigkeit vom Kornaufschlussgrad angesteuert wird, wobei mittels einer optischen Erfassungseinrichtung zyklisch Bilder des Erntegutstroms aufgenommen und an eine Bildanalyseeinrichtung zur Auswertung übertragen werden. Das erfindungsgemäße Bildanalyseverfahren ist dadurch gekennzeichnet, dass

- in einer ersten Stufe mittels digitaler Bildverarbeitung in den Bildern enthaltene Bildpixel in Kornbestandteile und Nicht-Kornbestandteile klassifiziert werden, und dass
- in einer zweiten Stufe des Bildanalyseverfahrens eine Längenbestimmung einer langen Hauptachse und einer kurzen Hauptachse jedes klassifizierten Kornbestandteils mittels eines Längen-Breiten-Vergleichs durchgeführt wird,

wobei die Durchführung der ersten Stufe und der zweiten Stufe des Bildanalyseverfahrens durch zumindest ein neuronales Netzwerk durchgeführt wird.

Wesentlich ist die Überlegung, dass beim optischen Sieben auf Änderungen reagiert wird, die bereits während eines Ernteprozesses auf einem Feld oder zwischen zwei Erntekampagnen auf demselben Feld auftreten können. So kann die Korngröße von Mais sowohl regional als auch saisonal aufgrund abweichender Randbedingungen während des Wuchses variieren, was sich auf die durchschnittliche Korngröße auswirkt. So würde eine im Labor untersuchte Probe als gut aufbereitet gelten, welche einen CSPS > 70% aufweist (vgl. https://www.dairylandlabs.com/media-library/documents/234.pdf) obwohl sich noch ganze Körner in der Silage befinden. Ganze Körner sind dabei von Wiederkäuern nicht zu verdauen, da die Pansen-Mikroben die Schale (Perikarp) der Maiskörner nicht durchdringen können und so aus der Stärke, welche sich hauptsächlich in den Maiskörnern befindet keinen Milchzucker produzieren können. Die Körner werden unverdaut ausgeschieden und die Milchleistung sinkt.

Das Klassifizieren in Kornbestandteile und Nicht-Kornbestandteile und die anschließende Längenbestimmung einer langen Hauptachse und einer kurzen Hauptachse jedes klassifizierten Kornbestandteils mittels des Längen-Breiten-Vergleichs ermöglichen es, den Kornaufschlussgrad unter Berücksichtigung von Ernteguteigenschaften zu bestimmen. Dabei berücksichtigt das Verfahren die äußeren Einflüsse, die während des Pflanzenwachstums die tatsächliche Korngröße beeinflussen. Es werden somit Schwankungen der Korngröße innerhalb eines aktuell bearbeiteten Bestandes berücksichtigt. Hierdurch lässt sich die Genauigkeit der Berechnung des Corn-Silage-Processing-Scores (CSPS) basierend auf dem Prozess des optischen Siebens verbessern. Es wird die mobile Bestimmung des Qualitätswertes, des CSPS, d.h. unmittelbar an einer Erntemaschine wie ein Feldhäcksler, für die Bewertung von Maissilage ermöglicht, welcher die tatsächliche Kornaufbereitung wiederspiegelt und letztlich auch mit der Milchleistung skaliert.

Die aufgenommenen Bilder werden dem zumindest einen künstlichen neuronalen Netzwerk als Eingangssignal zur Verfügung gestellt, welches Bestandteil der Bildanalyseeinrichtung ist.

Insbesondere kann zur Berechnung des Kornaufschlussgrades der Quotient aus der Summe der Fläche von klassifizierten Kornbestandteilen, die einen adaptiven Grenzwert für die Länge der kurzen Hauptachsen unterschreiten, und der Summe der Fläche aller klassifizierten Kornbestandteile, gebildet werden.

Die Verwendung eines, insbesondere dynamisch, adaptiven Grenzwertes, um den Kornaufschlussgrad unter Berücksichtigung von Ernteguteigenschaften zu bestimmen, berücksichtigt die äußeren Einflüsse, die während des Pflanzenwachstums die tatsächliche Korngröße beeinflussen.

Insbesondere kann der Grenzwert automatisch und/oder manuell adaptiert werden.

Bevorzugt kann der Grenzwert zyklisch in Intervallen adaptiert werden. Mit zyklisch Adaptieren ist das wiederholte Anpassen des Grenzwertes innerhalb eines definierbaren Zeitraums und/oder in Abhängigkeit eines definierbaren Erntegutdurchsatzes oder einer definierbaren Fahrstrecke auf einem Feld während des Ernteprozesses gemeint.

Vorzugsweise können die in den Bildern enthaltenen Bildpixel mittels semantischer Bildsegmentierung, Objekterkennung oder Instanz-Segmentierung klassifiziert werden. Ein geeigneter Bildverarbeitungsalgorithmus, vorzugsweise die semantische Bildsegmentierung, kann bevorzugt mittels des zumindest einen neuronalen Netzwerkes ausgeführt werden.

Gemäß einer Weiterbildung kann das Bestimmen der langen Hauptachse und der kurzen Hauptachse jedes klassifizierten Kornbestandteils zur Flächenbestimmung in zeitlich beabstandeten Intervallen durchgeführt werden.

Insbesondere kann innerhalb der als Kornbestandteile klassifizierten Bildpixel eines aufgenommenen Bildes eine Differenzierung zwischen ganzen Körnern und zerkleinerten Körnern mittels Segmentierung, insbesondere semantischer Bildsegmentierung, durchgeführt werden. Die zyklische Anpassung des Grenzwertes erfolgt durch die Anpassung der binären Klassifikation, bei welcher zwischen Kornbestandteilen und Nicht-Kornbestandteilen unterscheiden wird. Mittels einer Mehrklassen-Klassifizierung kann durch Segmentierung zwischen ganzen Körnern und gebrochenen Körnern innerhalb der detektierten Kornbestandteile unterschieden wird. Über die Polygone der als "ganzes Korn" klassifizierten Körner kann mittels der bestimmten kurzen und langen Hauptachse des Korns eine mittlere Korngröße bestimmt werden. Dabei lässt sich ein Trägheitsfaktor, hier und vorzugsweise als zeitlich beabstandete Intervalle, in den Verfahrensablauf implementieren, sodass die mittels Längen-Breiten-Vergleichs bestimmte mittlere Korngröße nur innerhalb eines ausgewählten Zeitfensters während des Ernteprozesses, bezogen auf alle in dem Intervall detektierten ganzen Körner, aktualisiert wird.

Dabei kann aus der Summe der innerhalb des Intervalls bestimmten Fläche ganzer Körner ein die mittlere Korngröße repräsentierender Mittelwert für die sichtbare Fläche gebildet werden, aus welchem der zu adaptierende Grenzwert als ein Bruchteilwert der langen Hauptachse und/oder der kurzen Hauptachse dynamisch abgeleitet wird. So kann als Bruchteilwert die Hälfte der kurzen und/oder der langen Hauptachse verwendet werden, sodass das Korn als geviertelt angesehen wird. Alternativ sind auch andere Bruchteilwerte, wie Dritteln oder Fünfteln der kurzen und/oder der langen Hauptachse, denkbar. Der auf diese Weise aktualisierte adaptierte Grenzwert wird dem Bildanalyseverfahren zur Bestimmung des Kornaufschlussgrades zugrunde gelegt.

Gemäß einer Ausgestaltung kann die manuelle Adaption des Grenzwerts durch eine Auswahl aus einem vorgegebenen oder vorgebbaren Wertebereich für Werte einer minimalen Korngröße und einer maximalen Korngröße und/oder durch eine Eingabe zumindest eines Wertes einer mittleren Korngröße durchgeführt werden, die für den durchzuführenden Ernteprozess Gültigkeit hat. Die manuelle Adaption des Grenzwertes kann durch das Bildanalyseverfahren dahingehend unterstützt werden, dass bei einer signifikanten Abweichung des berechneten die mittlere Korngröße repräsentierendes Mittelwertes vom manuell vorgegebenen Wert ein Hinweis darauf für einen Bediener generiert wird. Bevorzugt kann dieser Hinweis einen Vorschlag für die manuelle Anpassung des Grenzwertes enthalten.

Denkbar ist auch eine manuelle Vorgabe des Grenzwertes als initialer Wert, welcher im weiteren Verlauf des Ernteprozesses automatisch adaptiert wird.

Bei einer automatischen Anpassung des Grenzwertes ist es denkbar, dass zu Beginn des Ernteprozesses ein hinterlegter oder abrufbarer voreingestellter initialer Wert des Grenzwertes verwendet wird, der im weiteren Verlauf adaptiert wird. Beispielsweise kann im Rahmen der Dokumentation für einen Schlag auf historische Daten zurückgegriffen werden, welche Informationen zu vorangehend angebautem Erntegut und zurückliegenden Ernteprozessen beinhalten.

Weiterhin wird die eingangs gestellte Aufgabe durch eine Bildanalyseeinrichtung für einen Feldhäcksler mit den Merkmalen des Anspruches 10 sowie einen Feldhäcksler mit den Merkmalen des Anspruches 12 gelöst.

Gemäß Anspruch 10 wird eine Bildanalyseeinrichtung für einen Feldhäcksler vorgeschlagen, welcher ein Vorsatzgerät als Arbeitsaggregat zur Aufnahme von Erntegut, Arbeitsaggregate zur Bearbeitung eines aus dem aufgenommen Erntegut erzeugten Erntegutstromes, sowie ein Fahrerassistenzsystem, welches zur Ansteuerung der Arbeitsaggregate ausgeführt und eingerichtet ist, umfasst, wobei die Bildanalyseeinrichtung eine optische Erfassungseinrichtung umfasst, welche zyklisch Bilder des bearbeiteten Erntegutstroms aufnimmt und an die Bildanalyseeinrichtung zur Bildanalyse unter Verwendung eines Bildanalyseverfahrens überträgt, um einen Kornaufschlussgrad von Körnern im Erntegutstrom zu bestimmen, wobei das Fahrerassistenzsystem das Ergebnis der Bestimmung des Kornaufschlussgrades zur Ansteuerung zumindest eines Arbeitsaggregat in Abhängigkeit vom Kornaufschlussgrad verwendet, wobei die Bildanalyseeinrichtung dazu ausgeführt und eingerichtet ist, in einer ersten Stufe des Bildanalyseverfahrens in den Bildern enthaltene Bildpixel in Kornbestandteile und Nicht-Kornbestandteile zu klassifizieren, und in einer zweiten Stufe des Bildanalyseverfahrens eine Längenbestimmung einer langen Hauptachse und einer kurzen Hauptachse jedes klassifizierten Kornbestandteils mittels eines Längen-Breiten-Vergleichs durchzuführen, wobei die Bildanalyseeinrichtung zur Durchführung der ersten Stufe und der zweiten Stufe des Bildanalyseverfahrens zumindest ein neuronales Netzwerk umfasst.

Insbesondere kann die Bildanalyseeinrichtung zur automatischen Durchführung des Bildanalyseverfahrens gemäß einem der Ansprüche 1 bis 9 ausgeführt und eingerichtet sein.

Bevorzugt ist die Bildanalyseeinrichtung ausgeführt und eingerichtet, zunächst in den Bildern enthaltene Bildpixeln in Kornbestandteile und Nicht-Kornbestandteile binär zu klassifizieren, anschließend eine Länge einer langen Hauptachse und einer kurzen Hauptachse jedes klassifizierten Kornbestandteils anhand eines Längen-Breiten-Vergleichs zu bestimmen, und daraus den Kornaufschlussgrades als Quotienten aus der Summe der Fläche von klassifizierten Kornbestandteilen, die einen adaptiven Grenzwert für die Länge der kurzen Hauptachse unterschreiten, und der Summe der Fläche aller klassifizierten Kornbestandteile zu berechnen.

Auf alle Ausführungen zu dem erfindungsgemäßen Verfahren darf verwiesen werden.

Gemäß Anspruch 12 wird ein Feldhäcksler vorgeschlagen, umfassend ein Vorsatzgerät als Arbeitsaggregat zur Aufnahme von Erntegut, Arbeitsaggregate zur Bearbeitung eines aus dem aufgenommen Erntegut erzeugten Erntegutstromes, ein Fahrerassistenzsystem, welches zur Ansteuerung der Arbeitsaggregate ausgeführt und eingerichtet ist, eine Bildanalyseeinrichtung gemäß Anspruch 10 oder 11 zur Bildanalyse unter Verwendung eines Verfahrens nach einem der Ansprüche 1 bis 9, um den Kornaufschlussgrad von Körnern im Erntegutstrom zu bestimmen, wobei das Fahrerassistenzsystem zur Ansteuerung eines als Nachzerkleinerungsvorrichtung ausgeführten Arbeitsaggregates in Abhängigkeit vom bestimmten Kornaufschlussgrad ausgeführt und eingerichtet ist.

Insbesondere kann die Nachzerkleinerungsvorrichtung zwei Walzen zum Aufschließen von ganzen Körnern im Erntegutstrom aufweisen, die im Betrieb mit jeweils einer als Parameter einstellbaren Drehzahl rotieren, wobei zwischen den Walzen ein Spalt mit einer als Parameter einstellbaren Spaltbreite verbleibt, durch den der Erntegutstrom verläuft, und dass die Walzen eine als Parameter einstellbare Drehzahldifferenz aufweisen, um die sich die Drehzahlen der Walzen unterscheiden, wobei das Fahrerassistenzsystem zumindest einen dieser Parameter in Abhängigkeit vom bestimmten Kornaufschlussgrad ansteuert.

Bevorzugt können die Nachzerkleinerungsvorrichtung und das Fahrerassistenzsystem einen Prozessaggregatautomaten bilden, wobei der Prozessaggregatautomat dazu ausgeführt und eingerichtet ist, die Parameter in Abhängigkeit vom bestimmten Kornaufschlussgrad zu optimieren und die optimierten Parameter der Nachzerkleinerungsvorrichtung vorzugeben.

Bevorzugt kann die optische Erfassungseinrichtung entlang eines Ernteguttransportweges hinter der Nachzerkleinerungsvorrichtung angeordnet sein, vorzugsweise kann die optische Erfassungseinrichtung an einem Auswurfkrümmer des Feldhäckslers angeordnet sein.

Die vorliegende Erfindung wird nachstehend anhand eines in den Zeichnungen dargestellten Ausführungsbeispieles näher erläutert.

Es zeigen:

Fig. 1    schematisch und exemplarisch einen Feldhäcksler;

Fig. 2    schematisch und exemplarisch ein von einer optischen Erfassungseinrichtung aufgenommenes Bild von gehäckseltem Erntegut;

Fig. 3    schematisch und exemplarisch ein Binärbild des durch ein Bildanalyseverfahren analysierten Bildes gemäß Fig. 2;

Fig. 4    schematisch und exemplarisch einen vergrößerten Ausschnitt des Binärbildes gemäß Fig. 3;

Fig. 5    schematisch und exemplarisch eine Auswertung des Binärbildes gemäß Fig. 3;

Fig. 6    exemplarisch ein Flussdiagramm des Bildanalyseverfahrens; und

Fig. 7    schematisch und exemplarisch eine Darstellung einer grafischen Schnittstelle einer Eingabe-Ausgabe-Einheit eines Fahrerassistenzsystems.

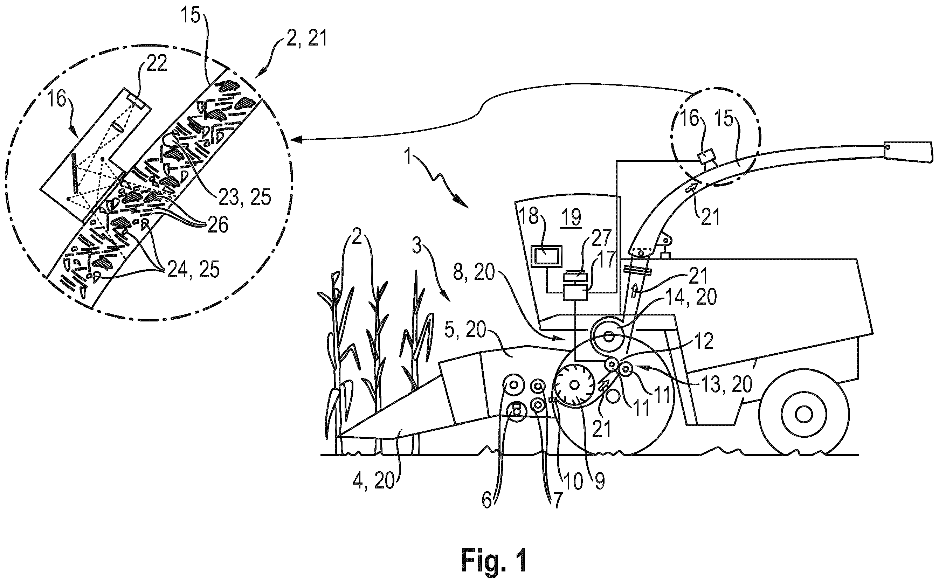

Fig. 1 zeigt schematisch und exemplarisch einen erfindungsgemäßen Feldhäcksler 1 beim Abernten eines Bestandes von Pflanzen, insbesondere Maispflanzen 2, auf einem Feld. Eine Aufnahmevorrichtung 3 des Feldhäckslers 1 umfasst in an sich bekannter Weise ein in Anpassung an das zu erntende Pflanzenmaterial austauschbares Vorsatzgerät 4 und eine Einzugseinrichtung 5 mit mehreren Walzenpaaren 6, 7, die das Erntegut von dem Vorsatzgerät 4 übernimmt, um es einer Häckselvorrichtung 8 zuzuführen.

Die Häckselvorrichtung 8 umfasst eine drehangetriebene Häckseltrommel 9, eine Gegenschneide 10, über welche die Maispflanzen 2 von dem benachbarten Walzenpaar 7 der Einzugseinrichtung 5 hindurch geschoben werden, um durch Zusammenwirken der Gegenschneide 10 mit der Häckseltrommel 9 zerkleinert zu werden. Der Häckselvorrichtung 8 ist eine Nachzerkleinerungsvorrichtung 13, auch als Corn-Cracker bezeichnet, mit einem Paar von Konditionier- oder Crackerwalzen 11, die einen Spalt 12 von verstellbarer Breite, im Folgenden auch als Crackerspalt bezeichnet, begrenzen und mit unterschiedlichen Geschwindigkeiten rotieren, um in dem durch den Spalt 12 hindurchtretenden Materialstrom enthaltene Maiskörner zu zerkleinern, nachgeordnet. Ein Nachbeschleuniger 14 verleiht dem zerkleinerten und in der Nachzerkleinerungsvorrichtung 13 konditionierten Erntegut, hier den Maispflanzen 2, die notwendige Geschwindigkeit, um einen Auswurfkrümmer 15 zu durchlaufen und in ein (nicht dargestelltes) Begleitfahrzeug übergeladen zu werden. An dem Auswurfkrümmer 15 ist zumindest eine optische Erfassungseinrichtung 16 angeordnet, um Bilder eines durch den Auswurfkrümmer 15 hindurch geförderten Erntegutstroms 21 (durch Pfeile veranschaulicht) zu erzeugen.

Das Vorsatzgerät 4, die Einzugsvorrichtung 5, die Häckselvorrichtung 8, die Nachzerkleinerungsvorrichtung 13 sowie der Nachbeschleuniger 14 und deren jeweilige Komponenten sind Arbeitsaggregate 20 des Feldhäckslers 1, die dem Abernten der Maispflanzen 2 eines Feldbestandes und/oder der Bearbeitung der Maispflanzen 2 des Feldbestandes im Rahmen des Ernteprozesses dienen.

Innerhalb des von den Arbeitsaggregaten 20 des Feldhäckslers 1 bearbeiteten Erntegutstroms 21 befinden sich ganze Körner 23 und zerkleinerte Körner 24 als Kornbestandteile 25 sowie Nicht-Kornbestandteile 26, wie Stängel, Blätter und dergleichen.

Die optische Erfassungseinrichtung 16 weist eine Kamera 22 zur Aufnahme von Bilddaten des Ernteguts des Erntegutstroms 21 auf. Unter den Begriff "Kamera" fallen dabei beliebige optische Sensoren, die ortsaufgelöst Bilddaten aufnehmen. Der Begriff "ortsaufgelöst" bedeutet hier, dass es in den Bilddaten möglich ist, Einzelheiten des Ernteguts zu unterscheiden. Die Kamera 22 weist also zumindest genügend Pixel auf, um die vorschlagsgemäße, noch zu erläuternde Bildanalyse zu ermöglichen. Die optische Erfassungseinrichtung 16 erfasst in einer Messroutine mittels der Kamera 22 Bilddaten des Ernteguts im Erntegutstrom 21, hier der zerkleinerten Maispflanzen 2. Diese Messroutine wird entsprechend während des Betriebs des Feldhäckslers 1 durchgeführt.

Die von der optischen Erfassungseinrichtung 16 generierten Bilder werden an eine Bildanalyseeinrichtung 27 übertragen und von dieser ausgewertet.

Die Bildanalyseeinrichtung 27 ist mit einem Fahrerassistenzsystems 17 verbunden oder kann als Bestandteil des Fahrerassistenzsystems 17 ausgeführt sein. Das Fahrerassistenzsystem 17 kann mit einer Eingabe-Ausgabe-Einheit 18 in einer Fahrerkabine 19 des Feldhäckslers 1 verbunden sein, um Auswertungsergebnisse darauf auszugeben. Das Fahrerassistenzsystem 17 steuert zumindest ein Stellglied zum Einstellen der Spaltweite des Crackerspalts 12 und/oder der Differenzdrehzahl und/oder der Drehzahlniveaus der Walzen 11 der Nachzerkleinerungsvorrichtung 13 an.

Die Walzen 11 der Nachzerkleinerungsvorrichtung 13 rotieren im Betrieb mit jeweils einer als Parameter einstellbaren Drehzahl, wobei zwischen den Walzen der Spalt 12 mit einer als Parameter einstellbaren Spaltbreite verbleibt. Des Weiteren weisen die Walzen 11 eine als Parameter einstellbare Drehzahldifferenz auf, um die sich die Drehzahlen der Walzen 11 unterscheiden. Zumindest einen der Parameter steuert das Fahrerassistenzsystem 17 in Abhängigkeit von einem durch optisches Sieben zu bestimmenden Kornaufschlussgrad $CSPS_{opt}$ an.

Hintergrund der Ansteuerung der Nachzerkleinerungsvorrichtung 13 in Abhängigkeit vom Kornaufschlussgrad ist, dass es besonders bei der Verwendung des Ernteguts als Futtermittel für Tiere und bei der Verwendung in Biogasanlagen wichtig ist, dass die Kornbestandteile 25 des Ernteguts aufgeschlossen, also zerkleinert, werden. Wichtig ist das Aufschließen der Kornbestandteile 25, damit die darin enthaltene Stärke zugänglich wird und nicht durch die Hülle des Kornbestandteils 25 geschützt wird. Das Aufschließen der Kornbestandteile 25 geschieht einerseits durch das Häckseln des Ernteguts und andererseits wesentlich durch die Nachzerkleinerungsvorrichtung 13. Die Nachzerkleinerungsvorrichtung 13 kann zwar so eingestellt werden, dass mit Sicherheit alle Kornbestandteile 25 zerkleinert sind, was mit einem erhöhten Verbrauch an Energie bzw. Kraftstoff einhergeht. Diese unnötig hohe verbrauchte Energie kann damit nicht in eine Steigerung der Fahrgeschwindigkeit umgesetzt werden, so dass sich systemimmanent eine entsprechend geminderte Flächenleistung ergibt.

Nachstehend wird das vorschlagsgemäße Verfahren zur computerimplementierten Bestimmung des Kornaufschlussgrades der Körner 23 erläutert. Hierzu werden mittels der optischen Erfassungseinrichtung 16 zyklisch aufgenommene Bilder 28 des Erntegutstroms 21 an die Bildanalyseeinrichtung 27 zur Auswertung mittels eines Bildanalyseverfahrens übertragen.

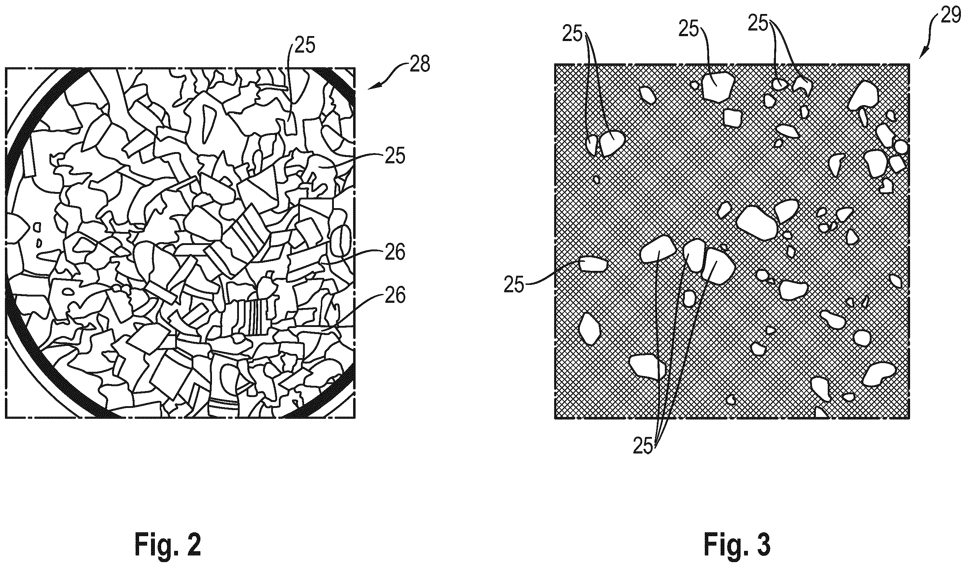

In Fig. 2 ist schematisch und exemplarisch ein von der optischen Erfassungseinrichtung 16 aufgenommenes Bild 28 von gehäckseltem Erntegut, hier der Maispflanze 2, dargestellt. In dem von der optischen Erfassungseinrichtung 16 aufgenommenen Bild 28 sind die Kornbestandteile 25 sowie Nicht-Kornbestandteile 26 der gehäckselten Maispflanze 2 sichtbar. Das Erkennen von Kornbestandteile 25 und das Unterscheiden von ganzen Körnern 23 von zerkleinerten Körnern 24 ist anhand eines solchen Bildes 28 nur sehr eingeschränkt möglich.

In Fig. 3 ist schematisch und exemplarisch ein Binärbild 29 des durch einen Bildverarbeitungsalgorithmus verarbeiteten Bildes 28 gemäß Fig. 2 dargestellt. Das durch semantische Segmentierung generierte Binärbild 29 zeigt nur Kornbestandteile 25, während alle in Bild 28 sichtbaren Nicht-Kornbestandteile 26 nicht dargestellt werden. Hierzu können die detektierten Kornbestandteile 25 z.B. in weiß dargestellt werden, während die detektierten Nicht-Kornbestandteile 26 einheitlich, beispielsweise in schwarz, dargestellt werden, so dass die detektierten Nicht-Kornbestandteile 26 einen einheitlichen Hintergrund der Visualisierung im Binärbild 29 bilden.

In einer ersten Stufe des Bildanalyseverfahrens werden in den von der optischen Erfassungseinrichtung 16 aufgenommenen Bildern 28 enthaltene Bildpixel in Kornbestandteile 25 und Nicht-Kornbestandteile 26 klassifiziert. Dies kann hier und vorzugsweise mittels semantischer Bildsegmentierung durchgeführt werden. Andere computerimplementierte Verfahren des computerbasierten Sehens, die zur Bildanalyse zur Anwendung kommen können, sind beispielsweise die Objekterkennung oder die Instanz-Segmentierung.

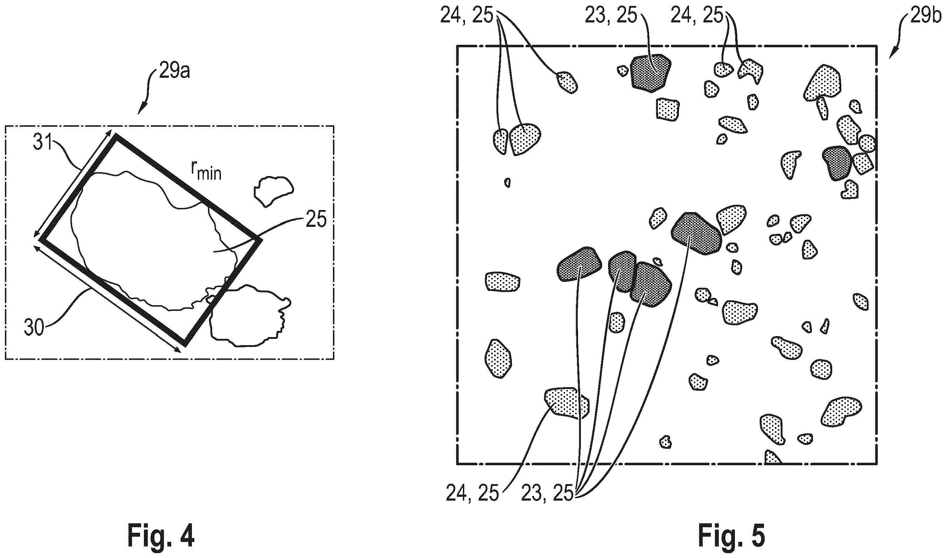

In einer zweiten Stufe des Bildanalyseverfahrens wird eine Längenbestimmung einer langen Hauptachse 30 und einer kurzen Hauptachse 31 jedes klassifizierten Kornbestandteils 25 mittels eines Längen-Breiten-Vergleichs durchgeführt, wie in Fig. 4 exemplarisch dargestellt.

Fig. 4 zeigt schematisch und exemplarisch einen vergrößerten Ausschnitt 29a des Binärbildes 29 gemäß Fig. 3. Der dabei ermittelte größte Wert $r_{min}$ für die Länge der kurzen Hauptachse 31 eines jeden Kornbestandteils 25 wird dem weiteren Verfahren zugrunde gelegt.

Die Durchführung der ersten Stufe und der zweiten Stufe des Bildanalyseverfahrens erfolgt durch zumindest ein neuronales Netzwerk. Das zumindest eine neuronale Netzwerk ist Bestandteil der Bildanalyseeinrichtung 27.

Das Bestimmen der langen Hauptachse 30 und der kurzen Hauptachse 31 jedes klassifizierten Kornbestandteils 25 zur Flächenbestimmung wird zyklisch in zeitlich beabstandeten Intervallen durchgeführt.

In Fig. 5 ist schematisch und exemplarisch eine erweiterte Auswertung des Binärbildes 29 gemäß Fig. 3 dargestellt. Durch eine Mehrklassen-Klassifikation mittels semantischer Bildsegmentierung kann ein Bild 29b generiert werden, in welchem zwischen den ganzen Körnern 23 als einer Klasse der Mehrklassen-Klassifikation und den zerkleinerten Körnern 24 als einer weiteren Klasse Mehrklassen-Klassifikation unterschieden wird.

Die Mehrklassen-Klassifikation kann gemäß dem erfindungsgemäßen Verfahren dazu herangezogen werden, um eine mittlere Korngröße zu bestimmen. Dies ist vor dem Hintergrund zusehen, dass Maispflanzen 2 aus unterschiedlichen Regionen und/oder Erntejahren voneinander abweichende mittlere Korngrößen aufweisen, was Einfluss auf die Bestimmung des Kornaufschlussgrades hat.

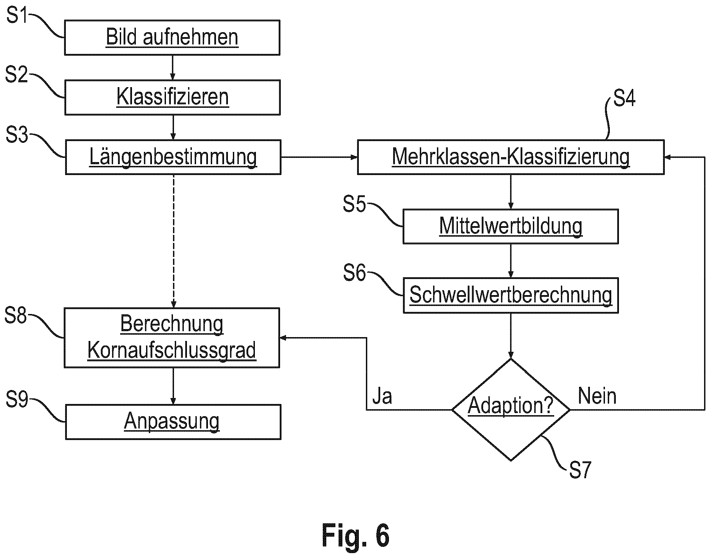

Fig. 6 veranschaulicht das Bildanalyseverfahren exemplarisch anhand eines Flussdiagramms. Das Bildanalyseverfahren beginnt im Schritt S1 mit der Aufnahme des Bildes 28 durch die optische Erfassungseinrichtung 16, welches an die Bildanalyseeinrichtung 27 übertragen wird.

Im Schritt S2 wird das Bild 28 mittels semantischer Segmentierung klassifiziert, um das Binärbild 29 zu generieren. Anhand der in dem jeweiligen Bild 28 enthaltenen Bildpixel werden die Kornbestandteile 25 und Nicht-Kornbestandteile 26 klassifiziert. Das so erzeugte mit Bild 28 korrespondierende Binärbild 29 enthält nur noch Informationen über die Kornbestandteile 25.

Im Schritt S3 wird die Längenbestimmung der langen Hauptachse 30 und der kurzen Hauptachse 31 jedes klassifizierten Kornbestandteils 25 mittels des Längen-Breiten-Vergleichs durchgeführt. Mittels der Binarisierung lässt sich aus den so bestimmten Kornbestandteilen 25 zum einen die sichtbare Oberfläche des jeweiligen Kornbestandteiles 25 über die reine Pixelanzahl bestimmen und zum anderen die Längenbestimmung der langen Hauptachse 30 und der kurzen Hauptachse 31 durchführen.

Die Berechnung des Kornaufschlussgrades $CSPS_{opt}$ auf Grundlage der Bildauswertung wird allgemein gemäß der nachstehenden Formel [1] durchgeführt.

$$CSPS_{opt} = \frac{\sum A_{KB}(r_{31} < r_{min})}{A_{KBG}} \quad [1].$$

In dieser Formel bezeichnen $CSPS_{opt}$ den durch optisches Sieben bestimmten Kornaufschlussgrad, $r_{min}$ einen Grenzwert für die maximale Länge der kurzen Hauptachse 31 der detektieren Kornbestandteile 25, $A_{KB}$ die sichtbare Fläche von Kornbestandteilen 25, deren Länge der kurzen Hauptachse 31 kleiner als der Grenzwert $r_{min}$ ist, und $A_{KBG}$ die sichtbare Fläche aller detektierten Kornbestandteile 25. Der Grenzwert $r_{min}$ entspricht dabei einer Sieböffnungsweite eines optischen Siebes. Passieren Kornbestandteile 25 diese optische Sieböffnungsweite, d.h. unterschreitet eine maximale Länge $r_{31}$ der kurzen Hauptachse 31 eines Kornbestandteils 25 den Grenzwert $r_{min}$, so entspricht das detektierte Kornbestandteil 25 einem zerkleinerten Korn 24. Der Grenzwert $r_{min}$ kann dem bei Laboruntersuchungen gemäß dem Stand der Technik zugrundeliegenden Grenzwert von 4,75 mm entsprechen.

Um während des durchzuführenden Ernteprozesses auf Schwankungen bei der tatsächlichen Korngröße reagieren zu können, wird die Berechnung des Kornaufschlussgrades $CSPS_{opt}$ gemäß der nachstehenden Formel [2] durchgeführt.

$$CSPS_{opt} = \frac{\sum A_{KB}(r_{31} < r_{adapt})}{A_{KBG}} \quad [2].$$

Mit $r_{adapt}$ ist hier ein adaptiver Grenzwert für die maximale Länge $r_{31}$ der kurzen Hauptachse 31 bezeichnet, dessen überschreiten den jeweiligen Kornbestandteil 25 als ganzes Korn 23 klassifiziert und dessen unterschreiten den jeweiligen Kornbestandteil 25 als zerkleinertes Korn 24 klassifiziert.

Der adaptive Grenzwert $r_{adapt}$ wird im Verlauf eines Ernteprozesses nicht konstant gehalten, sondern zyklisch angepasst, um auf Schwankungen bei der tatsächlichen Korngröße reagieren zu können.

Die Verwendung des, insbesondere dynamisch, adaptierten Grenzwertes $r_{adapt}$, um den adaptiven Kornaufschlussgrad $CSPS_{opt}$ unter Berücksichtigung von sich ändernden Ernteguteigenschaften zu bestimmen, berücksichtigt die äußeren Einflüsse, die während des Pflanzenwachstums die tatsächliche Korngröße beeinflussen. Somit lässt sich der Kornaufschlussgrad $CSPS_{opt}$ dynamisch an die tatsächlichen Erntebedingungen anpassen, was sich auf die Ansteuerung von Arbeitsaggregaten 20, insbesondere der Nachzerkleinerungsvorrichtung 13, des Feldhäckslers 1 vorteilhaft auswirkt.

Bevorzugt kann der adaptive Grenzwert $r_{adapt}$ zyklisch in Intervallen adaptiert werden. Mit zyklisch adaptieren ist das wiederholte Anpassen des Grenzwertes $r_{adapt}$ innerhalb eines definierbaren Zeitraums und/oder in Abhängigkeit eines definierbaren Erntegutdurchsatzes oder einer definierbaren Fahrstrecke auf einem Feld während des durchzuführenden Ernteprozesses gemeint.

Hierzu wird im Schritt S4 die Mehrklassen-Klassifizierung durchgeführt, wie sie weiter oben unter Bezugnahme auf Fig. 5 beschrieben wurde. Im Schritt S4 wird weiter zwischen den ganzen Körnern 23 und den zerkleinerten Körnern 24 als Kornbestandteile 25 unterschieden.

Die im Schritt S3 durchgeführte Längenbestimmung der langen Hauptachse 30 und der kurzen Hauptachse 31 jedes klassifizierten ganzen Korns 23 als Kornbestandteil 25 wird im Schritt S5 ausgewertet. Dabei wird im Schritt S5 aus der Summe der innerhalb des insbesondere zeitlichen Intervalls bestimmten Fläche $A_{KB}$ ganzer Körner 23 ein die mittlere Fläche der ganzen Körner 23 repräsentierender Mittelwert $A_{mKB}$ gebildet wird. Dieser Mittelwert $A_{mKB}$ wird als Kriterium für die mittlere Korngröße herangezogen. Über die Polygone der als "ganzes Korn 23" klassifizierten Kornbestandteile 25 kann mittels der bestimmten kurzen Hauptachse 31 und langen Hauptachse 30 des ganzen Korns 23 die mittlere Korngröße bestimmt werden. Dabei lässt sich ein Trägheitsfaktor, die zeitlich beabstandeten Intervalle, in den Verfahrensablauf implementieren, sodass die mittels Längen-Breiten-Vergleichs bestimmte mittlere Korngröße nur innerhalb eines ausgewählten Zeitfensters, bezogen auf alle in dem Intervall detektierten ganzen Körner 23, aktualisiert wird.

$$A_{mKB} = \frac{\sum A_{KB}}{B} \quad [3].$$

Der aus der mittleren Fläche der ganzen Körner 23 gebildete Mittelwert $A_{mKB}$ steht stellvertretend für die tatsächliche Korngröße des verarbeiteten Erntegutes. Aus dem Mittelwert $A_{mKB}$ wird dann im Schritt S6 der adaptive Grenzwert $r_{adapt}$ als Bruchteilwert B der langen Hauptachse 30 und/oder der kurzen Hauptachse 31 dynamisch abgeleitet (vgl. Formel [4]).

$$r_{adapt} = \frac{A_{mKB}}{B} \quad [4].$$

Hierzu wird im Schritt S6 der berechnete adaptive Grenzwert $r_{adapt}$ als Quotient aus Mittelwert $A_{mKB}$ und dem Bruchteilwert B gebildet. Als Bruchteilwert kann die Hälfte der kurzen Hauptachse 31 und/oder der langen Hauptachse 30 verwendet werden, sodass der verarbeitete Kornbestandteil 25 als geviertelt angesehen wird. Alternativ sind auch andere Bruchteilwerte B, wie Dritteln oder Fünfteln der kurzen Hauptachse 31 und/oder der langen Hauptachse 30, denkbar.

Im Schritt S7 wird durch Vergleich des in einem vorangehenden Intervall verwendeten Grenzwertes $r_{adapt}$ mit dem im Schritt S6 berechneten adaptiven Grenzwert $r_{adapt}$ verglichen. Bei einer Abweichung wird bei der Durchführung der Berechnung im Schritt S8 der im Schritt S6 berechnete Grenzwert $r_{adapt}$ verwendet.

Der adaptive Grenzwert $r_{adapt}$ kann automatisch und/oder manuell adaptiert werden.

Bei einer automatischen Anpassung des Grenzwertes $r_{adapt}$ ist es denkbar, dass zu Beginn des Ernteprozesses ein hinterlegter oder abrufbarer voreingestellter initialer Wert des Grenzwertes $r_{adapt}$, z.B. der Grenzwert $r_{min}$, verwendet wird, der im weiteren Verlauf adaptiert wird. Beispielsweise kann im Rahmen der Dokumentation für einen Schlag auf historische Daten zurückgegriffen werden, welche Informationen zu vorangehend angebautem Erntegut und zurückliegenden Ernteprozessen beinhalten.

Die Nachzerkleinerungsvorrichtung 13 und das Fahrerassistenzsystem 17 bilden einen Prozessaggregatautomaten. Der Prozessaggregatautomat ist dazu ausgeführt und eingerichtet ist, die Parameter zur Ansteuerung der Nachzerkleinerungsvorrichtung 13 in Abhängigkeit vom bestimmten Kornaufschlussgrad $CSPS_{opt}$ zu optimieren und die optimierten Parameter dem zumindest einen Stellglied zum Einstellen der Spaltweite des Crackerspalts 12 und/oder der Differenzdrehzahl und/oder der Drehzahlniveaus der Walzen 11 der Nachzerkleinerungsvorrichtung 13 vorzugeben.

Im Schritt S9 wird der ermittelte Wert für den Kornaufschlussgrad $CSPS_{opt}$ an das Fahrerassistenzsystem 17 übertragen. Das Fahrerassistenzsystem 17 verwendet den verfahrensgemäß bestimmten Wert für den Kornaufschlussgrad $CSPS_{opt}$ zur Ansteuerung zumindest der Nachzerkleinerungsvorrichtung 13 in Abhängigkeit von diesem. Der von der Nachzerkleinerungsvorrichtung 13 und dem Fahrerassistenzsystem 17 gebildete Prozessaggregatautomat ist dazu ausgeführt und eingerichtet ist, zumindest einen der Parameter der Nachzerkleinerungsvorrichtung 13 in Abhängigkeit von dem bestimmten Kornaufschlussgrad $CSPS_{opt}$ zu optimieren und dem zumindest einen Stellglied der Nachzerkleinerungsvorrichtung 13 vorzugeben. Hierdurch lassen sich die Effizienz sowie die Qualität des Häckselprozesses verbessern.

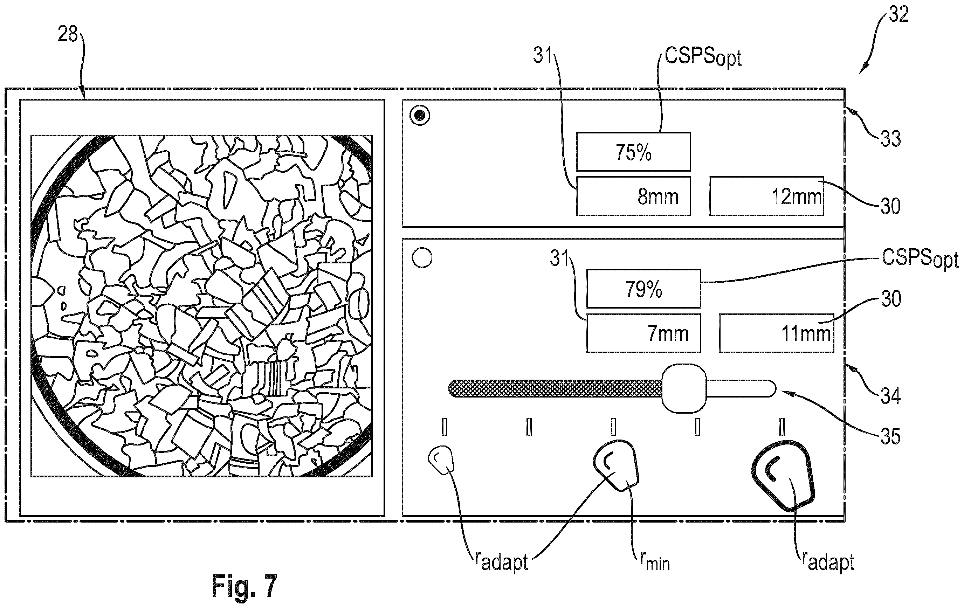

In Fig. 7 ist schematisch und exemplarisch eine Darstellung einer grafischen Schnittstelle 32 der Eingabe-Ausgabe-Einheit 18 des Fahrerassistenzsystems 17 gezeigt. Bevorzugt ist die Eingabe-Ausgabe-Einheit 18 als berührungssensitiver Bildschirm ausgeführt.

Die grafische Schnittstelle 32 ist dazu ausgeführt, auf einer Seite des Bildschirms eines der von der optischen Erfassungseinrichtung 16 aufgenommenen Bilder 28 von gehäckseltem Erntegut anzuzeigen. Auf der gegenüberliegenden Seite sind ein erstes Bedienfeld 33 und ein zweites Bedienfeld 34 visualisiert. Im ersten Bedienfeld 33 werden die Daten bei automatischer Adaption des adaptiven Grenzwertes $r_{adapt}$ und dem damit bestimmten Kornaufschlussgrad $CSPS_{opt}$ gemäß Gleichung [2] fortlaufend aktualisiert. Weiterhin werden Werte für die bestimmte Länge der langen Hauptachse 30 und der kurzen Hauptachse 31, deren Bestimmung im Schritt S4 des erfindungsgemäßen Verfahren während der Mehrklassen- Klassifizierung automatisch erfolgt. Alle im ersten Bedienfeld 33 angezeigten Informationen werden fortlaufend aktualisiert.

Im zweiten Bedienfeld 34 besteht die Möglichkeit, den adaptive Grenzwert $r_{adapt}$ manuell anzupassen. Auch in diesem zweiten Bedienfeld werden für die Länge der langen Hauptachse 30 und der kurzen Hauptachse 31 bestimmte Werte, deren Bestimmung im Schritt S4 des erfindungsgemäßen Verfahren während der Mehrklassen- Klassifizierung automatisch erfolgt, angezeigt und fortlaufend aktualisiert. Der Grenzwert $r_{adapt}$ kann vom Benutzer manuell eingestellt bzw. vorgegeben werden. Ein initialer Wert für den manuell vorgebbaren Grenzwert $r_{adapt}$ kann der Grenzwert $r_{min}$ sein, der bei Laboruntersuchungen zur Bestimmung des Kornaufschlussgrades zur Anwendung kommt.

Dieser manuell adaptierte Wert für den Grenzwert $r_{adapt}$ wird der Berechnung des Kornaufschlussgrades $CSPS_{opt}$ gemäß Gleichung [2] zugrunde gelegt. Die Berechnung und Anzeige des gemäß Gleichung [2] bestimmten Kornaufschlussgrades $CSPS_{opt}$ erfolgt ebenfalls zyklisch. Die Anzeige des Kornaufschlussgrades $CSPS_{opt}$ wird fortlaufend aktualisiert, wenn es zu Abweichungen kommt. Eine Veränderung des manuell vorgebbaren Grenzwertes $r_{adapt}$ kann beispielsweise mittels Slider 35 durchgeführt werden. Die Position des Sliders 35 soll dem Bediener des Feldhäcksler 1 visualisieren, dass er größere oder kleinere ganze Körner 23 als Berechnungsgrundlage des Kornaufschlussgrades $CSPS_{opt}$ gemäß Gleichung [2] auswählt. Alternative Eingabeelemente anstelle des Sliders 35 sind selbstverständlich ebenso möglich.

**Bezugszeichenliste**

| | | | |
|---|---|---|---|
| 1 | Feldhäcksler | 32 | Grafische Schnittstelle |

(fortgesetzt)

| 2 | Maispflanze | 33 | Erstes Bedienfeld |
|---|---|---|---|
| 3 | Aufnahmevorrichtung | 34 | Zweites Bedienfeld |
| 4 | Vorsatzgerät | 35 | Slider |
| 5 | Einzugseinrichtung | | |
| 6 | Walzenpaar | $r_{min}$ | Grenzwert |
| 7 | Walzenpaar | $CSPS_{opt}$ | Kornaufschlussgrad |
| 8 | Häckselvorrichtung | $r_{adapt}$ | Grenzwert |
| 9 | Häckseltrommel | | |
| 10 | Gegenschneide | | |
| 11 | Konditionier- oder Crackerwalze | | |
| 12 | Spalt | | |
| 13 | Nachzerkleinerungsvorrichtung | | |
| 14 | Nachbeschleuniger | | |
| 15 | Auswurfkrümmer | | |
| 16 | Erfassungseinrichtung | | |
| 17 | Fah rerassistenzsystem | | |
| 18 | Eingabe-Ausgabe-Einheit | | |
| 19 | Fahrerkabine | | |
| 20 | Arbeitsaggregat | | |
| 21 | Erntegutstrom | | |
| 22 | Kamera | | |
| 23 | Ganze Körner | | |
| 24 | Zerkleinerte Körner | | |
| 25 | Kornbestandteil | | |
| 26 | Nicht-Kornbestandteil | | |
| 27 | Bildanalyseeinrichtung | | |
| 28 | Bild | | |
| 29 | Binärbild | | |
| 29a | vergrößerten Ausschnitt von 29 | | |
| 29b | Bild | | |
| 30 | Lange Hauptachse | | |
| 31 | Kurze Hauptachse | | |

## Patentansprüche

**1.** Bildanalyseverfahren zur computerimplementierten Bestimmung des Kornaufschlussgrades ($CSPS_{opt}$) von Körnern (23) innerhalb eines von Arbeitsaggregaten (20) eines Feldhäckslers (1) bearbeiteten Erntegutstroms (21), der ganze Körner (23) und zerkleinerte Körner (24) als Kornbestandteile (25) sowie Nicht-Kornbestandteile (26) umfasst, wobei zumindest ein Arbeitsaggregat (20) in Abhängigkeit vom bestimmten Kornaufschlussgrad ($CSPS_{opt}$) angesteuert wird, wobei mittels einer optischen Erfassungseinrichtung (16) zyklisch Bilder (28) des Erntegutstroms (21) aufgenommen und an eine Bildanalyseeinrichtung (27) zur Auswertung übertragen werden, **dadurch gekennzeichnet, dass**

- in einer ersten Stufe des Bildanalyseverfahrens in den Bildern (28) enthaltene Bildpixel in Kornbestandteile (25) und Nicht-Kornbestandteile (26) klassifiziert werden,
- in einer zweiten Stufe des Bildanalyseverfahrens eine Längenbestimmung einer langen Hauptachse (30) und einer kurzen Hauptachse (31) jedes klassifizierten Kornbestandteils (25) mittels eines Längen-Breiten-Vergleichs durchgeführt wird,

wobei die Durchführung der ersten Stufe und der zweiten Stufe des Bildanalyseverfahrens durch zumindest ein neuronales Netzwerk durchgeführt wird.

2.  Verfahren nach Anspruch 1, **dadurch gekennzeichnet, dass** zur Berechnung des Kornaufschlussgrades ($CSPS_{opt}$) der Quotient aus der Summe der Fläche von klassifizierten Kornbestandteilen (25), die einen adaptiven Grenzwert ($r_{adapt}$) für die Länge der kurzen Hauptachsen (31) unterschreiten, und der Summe der Fläche aller klassifizierten Kornbestandteile (25), gebildet wird.

3.  Verfahren nach Anspruch 2, **dadurch gekennzeichnet, dass** der adaptive Grenzwert ($r_{adapt}$) automatisch und/oder manuell adaptiert wird.

4.  Verfahren nach Anspruch 2 oder 3, **dadurch gekennzeichnet, dass** der adaptive Grenzwert ($r_{adapt}$) zyklisch in Intervallen adaptiert wird.

5.  Verfahren nach einem der vorangehenden Ansprüche, **dadurch gekennzeichnet, dass** die in den Bildern (28) enthaltenen Bildpixel mittels semantischer Bildsegmentierung, Objekterkennung oder Instanz-Segmentierung klassifiziert werden.

6.  Verfahren nach einem der vorangehenden Ansprüche, **dadurch gekennzeichnet, dass** das Bestimmen der langen Hauptachse (30) und der kurzen Hauptachse (31) jedes klassifizierten Kornbestandteils (25) zur Flächenbestimmung in zeitlich beabstandeten Intervallen durchgeführt wird.

7.  Verfahren nach einem der vorangehenden Ansprüche, **dadurch gekennzeichnet, dass** innerhalb der als Kornbestandteile (25) klassifizierten Bildpixel eines aufgenommenen Bildes (28) eine Differenzierung zwischen ganzen Körnern (23) und zerkleinerten Körnern (24) mittels Segmentierung, insbesondere semantischer Bildsegmentierung, durchgeführt wird.

8.  Verfahren nach Anspruch 6 und 7, **dadurch gekennzeichnet, dass** aus der Summe der innerhalb des Intervalls bestimmten Fläche ganzer Körner (23) ein die mittlere Größe der Körner (23) repräsentierender Mittelwert für die sichtbare Fläche gebildet wird, aus welchem der adaptive Grenzwert ($r_{adapt}$) als Bruchteilwert der langen Hauptachse (30) und/oder der kurzen Hauptachse (31) dynamisch abgeleitet wird.

9.  Verfahren nach einem der Ansprüche 2 bis 7, **dadurch gekennzeichnet, dass** die manuelle Adaption des adaptiven Grenzwerts ($r_{adapt}$) durch eine Auswahl aus einem vorgegebenen oder vorgebbaren Wertebereich für Werte einer mittleren Korngröße und/oder durch eine Eingabe zumindest eines Wertes einer mittleren Korngröße durchgeführt wird.

10. Bildanalyseeinrichtung (27) für einen Feldhäcksler (1), welcher ein Vorsatzgerät (4) als Arbeitsaggregat (20) zur Aufnahme von Erntegut, Arbeitsaggregate (20) zur Bearbeitung eines aus dem aufgenommen Erntegut erzeugten Erntegutstromes (21), sowie ein Fahrerassistenzsystem (17), welches zur Ansteuerung der Arbeitsaggregate (20) ausgeführt und eingerichtet ist, umfasst, wobei die Bildanalyseeinrichtung (17) eine optische Erfassungseinrichtung (16) umfasst, welche zyklisch Bilder (28) des bearbeiteten Erntegutstroms (21) aufnimmt und an die Bildanalyseeinrichtung (27) zur Bildanalyse unter Verwendung eines Bildanalyseverfahrens überträgt, um den Kornaufschlussgrad ($CSPS_{opt}$) von Körnern (23) im Erntegutstrom (21) zu bestimmen, wobei das Fahrerassistenzsystem (17) das Ergebnis der Bestimmung des Kornaufschlussgrades ($CSPS_{opt}$) zur Ansteuerung zumindest eines Arbeitsaggregat (20) in Abhängigkeit vom bestimmten Kornaufschlussgrad ($CSPS_{opt}$) verwendet, **dadurch gekennzeichnet, dass** die Bildanalyseeinrichtung (27) dazu ausgeführt und eingerichtet ist, in einer ersten Stufe des Bildanalyseverfahrens in den Bildern (28) enthaltene Bildpixel in Kornbestandteile (25) und Nicht-Kornbestandteile (26) zu klassifizieren, und

    - in einer zweiten Stufe des Bildanalyseverfahrens eine Längenbestimmung einer langen Hauptachse (30) und einer kurzen Hauptachse (31) jedes klassifizierten Kornbestandteils (25) mittels eines Längen-Breiten-Vergleichs durchzuführen,

    wobei die Bildanalyseeinrichtung (27) zur Durchführung der ersten Stufe und der zweiten Stufe des Bildanalyseverfahrens zumindest ein neuronales Netzwerk umfasst.

11. Bildanalyseeinrichtung (27) nach Anspruch 10, **dadurch gekennzeichnet, dass** die Bildanalyseeinrichtung (27) zur automatischen Durchführung des Bildanalyseverfahrens gemäß einem der Ansprüche 1 bis 9 ausgeführt und eingerichtet ist.

12. Feldhäcksler (1), umfassend ein Vorsatzgerät (4) als Arbeitsaggregat (20) zur Aufnahme von Erntegut, Arbeitsaggregate (20) zur Bearbeitung eines aus dem aufgenommen Erntegut erzeugten Erntegutstromes (21), ein Fahrerassistenzsystem (17), welches zur Ansteuerung der Arbeitsaggregate (20) ausgeführt und eingerichtet ist, eine Bildanalyseeinrichtung (27) gemäß Anspruch 10 oder 11 zur Bildanalyse unter Verwendung eines Verfahrens nach einem der Ansprüche 1 bis 9, um einen Kornaufschlussgrad ($CSPS_{opt}$) von Körnern (23) im Erntegutstrom (21) zu bestimmen, **dadurch gekennzeichnet, dass** das Fahrerassistenzsystem (17) zur Ansteuerung eines als Nachzerkleinerungsvorrichtung (13) ausgeführten Arbeitsaggregates (20) in Abhängigkeit vom bestimmten Kornaufschlussgrad ($CSPS_{opt}$) ausgeführt und eingerichtet ist.

13. Feldhäcksler (1) nach Anspruch 12, **dadurch gekennzeichnet, dass** die Nachzerkleinerungsvorrichtung (13) zwei Walzen (11) zum Aufschließen von ganzen Körnern (23) im Erntegutstrom (21) aufweist, die im Betrieb mit jeweils einer als Parameter einstellbaren Drehzahl rotieren, wobei zwischen den Walzen (11) ein Spalt (12) mit einer als Parameter einstellbaren Spaltbreite verbleibt und dass die Walzen (11) eine als Parameter einstellbare Drehzahldifferenz aufweisen, um die sich die Drehzahlen der Walzen (11) unterscheiden, wobei das Fahrerassistenzsystem (17) zumindest einen der Parameter in Abhängigkeit vom bestimmten Kornaufschlussgrad ($CSPS_{opt}$) ansteuert.

14. Feldhäcksler (1) nach Anspruch 13, **dadurch gekennzeichnet, dass** die Nachzerkleinerungsvorrichtung (13) und das Fahrerassistenzsystem (17) einen Prozessaggregatautomaten bilden, wobei der Prozessaggregatautomat dazu ausgeführt und eingerichtet ist, die Parameter in Abhängigkeit vom bestimmten Kornaufschlussgrad ($CSPS_{opt}$) zu optimieren und die optimierten Parameter der Nachzerkleinerungsvorrichtung (13) vorzugeben.

15. Feldhäcksler (1) nach Anspruch einem der Ansprüche 12 bis 14, **dadurch gekennzeichnet, dass** die optische Erfassungseinrichtung (16) entlang eines Erntaguttransportweges hinter der Nachzerkleinerungsvorrichtung (13) angeordnet ist, vorzugsweise dass die optische Erfassungseinrichtung (16) an einem Auswurfkrümmer (15) des Feldhäckslers (1) angeordnet ist.

Fig. 1

Fig. 3

Fig. 2

Fig. 4

Fig. 5

EP 4 480 298 A1

Fig. 6

Fig. 7

EP 4 480 298 A1

Europäisches
Patentamt

European
Patent Office

Office européen
des brevets

# EUROPÄISCHER RECHERCHENBERICHT

**Nummer der Anmeldung**

EP 24 16 8672

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2020 122208 A1 (CLAAS SELBSTFAHRENDE ERNTEMASCHINEN GMBH [DE]) 3. März 2022 (2022-03-03) | 1-4,6, 8-15 | INV. A01D41/127 A01D43/08 |
| Y | * Abbildungen 1, 2 * * Absätze [0008], [0010], [0011], [0013], [0024], [0028], [0029], [0041], [0048], [0049] * ----- | 5,7 | G06T7/00 G06V10/82 A01D43/10 |
| Y | DE 10 2021 116118 A1 (CLAAS SELBSTFAHRENDE ERNTEMASCHINEN GMBH [DE]) 22. Dezember 2022 (2022-12-22) * Abbildungen 1-3 * * Anspruch 4 * * Absätze [0001] - [0085] * ----- | 5,7 | |
| A,D | DE 10 2014 011308 A1 (CLAAS SELBSTFAHR ERNTEMASCH [DE]) 4. Februar 2016 (2016-02-04) * Abbildungen 1-3 * * Absätze [0003], [0007], [0011], [0012], [0017], [0030] - [0035] * ----- | 1-15 | |
| | | | **RECHERCHIERTE SACHGEBIETE (IPC)** |
| A | CN 110 887 707 B (UNIV JIANGSU) 22. März 2022 (2022-03-22) * Abbildung 1 * * Absätze [0001] - [0003], [0030] - [0039] * ----- | 1-15 | A01D G06V G06T |

Der vorliegende Recherchenbericht wurde für alle Patentansprüche erstellt

| Recherchenort | Abschlußdatum der Recherche | Prüfer |
|---|---|---|
| München | 12. August 2024 | Rahbauer, Sebastian |

EPO FORM 1503 03.82 (P04C03)

**EP 4 480 298 A1**

## ANHANG ZUM EUROPÄISCHEN RECHERCHENBERICHT
## ÜBER DIE EUROPÄISCHE PATENTANMELDUNG NR.

EP 24 16 8672

12-08-2024

| Im Recherchenbericht angeführtes Patentdokument | Datum der Veröffentlichung | Mitglied(er) der Patentfamilie | Datum der Veröffentlichung |
|---|---|---|---|
| DE 102020122208 A1 | 03-03-2022 | DE 102020122208 A1 | 03-03-2022 |
|  |  | EP 3959957 A1 | 02-03-2022 |
|  |  | US 2022061216 A1 | 03-03-2022 |
| DE 102021116118 A1 | 22-12-2022 | DE 102021116118 A1 | 22-12-2022 |
|  |  | EP 4108063 A1 | 28-12-2022 |
|  |  | US 2022400612 A1 | 22-12-2022 |
| DE 102014011308 A1 | 04-02-2016 | DE 102014011308 A1 | 04-02-2016 |
|  |  | EP 2982232 A2 | 10-02-2016 |
|  |  | US 2016029561 A1 | 04-02-2016 |
| CN 110887707 B | 22-03-2022 | KEINE |  |

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020122202 A1

- DE 102014011308 A1